# EUROPÄISCHE PATENTSCHRIFT

(11) **EP 2 452 859 B1**
(45) Veröffentlichungstag und Bekanntmachung des Hinweises auf die Patenterteilung: **05.06.2019**
(21) Anmeldenummer: 11188471.4
(22) Anmeldetag: 09.11.2011
(51) Int. Cl.: B61D 29/00, B60Q 3/46, B60Q 3/47, G08B 7/06, F21S 4/28, F21W 111/08, F21Y 115/10, F21W 107/10

(54) **EVAKUIERUNGSLICHT**
EVACUATION LIGHT
LUMIÈRE D'ÉVACUATION

(30) Priorität: 16.11.2010 DE 202010015422 U
(43) Veröffentlichungstag der Anmeldung: 16.05.2012
(73) Patentinhaber: Rüdiger, Harald, 01219 Dresden (DE)
(72) Erfinder: Rüdiger, Harald, 01219 Dresden (DE)
(74) Vertreter: Lippert Stachow Dresden

(56) Entgegenhaltungen:
- EP-A2- 1 498 656
- DE-A1-102006 041 967
- DE-A1-102007 048 099
- DE-U1-202007 010 429
- GB-A- 2 214 681
- GB-A- 2 220 288
- GB-A- 2 432 951
- JP-A- 2007 230 380
- US-A- 4 597 033
- US-A- 5 450 299
- US-A1- 2004 027 837
- US-B1- 7 347 606

## Beschreibung

Die Erfindung betrifft Fahrzeug mit einem Evakuierungslicht für nach unten und außen führende Handläufe oder Haltestangen an Waggontüren auf der Waggoninnenseite von schienengebundenen Fahrzeugen zur Personenbeförderung durch Tunnel, wie Personenzüge, Untergrundbahnen oder andere öffentliche Verkehrsmittel, zur sicheren und intuitiv wirkenden Markierung von Fluchtwegen.

Bei Fahrten durch Tunnels mit Personenzügen, Untergrundbahnen, Hochgeschwindigkeitszügen oder anderen öffentlichen Verkehrsmitteln muss immer damit gerechnet werden, dass auf Grund besonderer Umstände, sei es durch technische Störungen, Feuer oder Unfälle, ein Nothalt nötig wird und dass die Passagiere schnellstmöglich evakuiert werden müssen.

Im Falle von Feuer und/oder starker Rauchentwicklung muss dann die Evakuierung der Passagiere über Fluchttunnel besonders schnell und effektiv erfolgen. Hierzu ist in Tunnels vorgeschrieben, dass Fluchtwege neben einer ausreichenden Beleuchtung auch mit grünem Licht bzw. grünen Piktogrammen gekennzeichnet werden müssen, weil Personen im Fall der Gefahr grünes Licht intuitiv als Wegweiser erkennen und sofort in die Richtung laufen, wo sie dieses Licht erkennen.

Solange die Waggonbeleuchtung intakt ist, ist es zumindest möglich, die Ausgänge zu finden, wobei allerdings dann nicht ohne weiteres klar ist, auf welcher Seite des Wagens auszusteigen ist. Das kann insbesondere bei mehrgleisigen Strecken im Tunnel besonders gefährlich sein. Noch schwieriger wird die Evakuierung, wenn beim Nothalt zusätzlich die Beleuchtung im Waggon teilweise oder vollständig ausfällt. In solchen Fällen besteht die Gefahr, dass Panik unter den zu evakuierenden Passagieren mit schlimmen Folgen ausbricht, was es unbedingt zu verhindern gilt.

In der EP 1 498 656 A2 wird eine Tunnelbeleuchtung oder Tunnelnotbeleuchtung mit einer Gehäuseeinrichtung und einer darin angeordneten mit Leuchtdioden bestückten Leiterplatine beschrieben, die eine besonders gute Lichtausbeute bringen soll. Die Leiterplatine befindet sich in einem Hohlraum, der als Hohlraum-Prismenprofil mit einer nach außen ragenden Streulinse ausgebildet ist. Das Hohlraum-Prismenprofil ist derart in ein mit einem Längsschlitz versehenes Schutzrohr einschiebbar, dass sich die Streulinse außerhalb des Schutzrohres befindet.

Weiterhin wird in der GB 2 214 681 A ein Unfall-Evakuierungs- und Führungsmittel für Transportfahrzeuge beschrieben, um Personen gezielt aus dem Fahrzeug zu evakuieren. Kernstück sind hier Sensoren, die feststellen, wo z.B. ein Brandherd ist, so dass die Personen vom Brandherd weg geführt werden. Dazu werden farbige Leuchtstreifen verwendet, die Dauerlicht oder Lichtimpulse aussenden.

Aus der GB 2 220 288 A geht ein Fluchtweg-Führungssystem hervor. Dazu sind verschiedene Sensoren vorgesehen, die beispielsweise den Ort eines Feuers lokalisieren, so dass verschiedene Leuchtstreifen oder grüne Leuchten entlang unterschiedlicher Fluchtwege eingeschaltet werden können.

In der US 4 597 033 A wird ein System zur Anzeige von Fluchtwegen beschrieben, das aus Leuchtstreifen entlang von Fluchtwegen besteht. Die Leuchtstreifen bestehen aus wasserdichten Schläuchen, in denen einzelne Leuchtdioden angeordnet sind.

Das deutsche Gebrauchsmuster DE 20 2007 010 429 U1 bezieht sich auf ein Rohr- oder stabförmiges Verbundglaselement, in dem Leuchtdioden oder Lichtleiter angeordnet sind.

Die DE 10 2006 041 967 A1 bezieht sich auf ein Konstruktionselement in Form eines Stahlrohres mit transparenten Fenstern, welches an beiden Enden Steckverbinder aufweist. Im Rohr befinden sich ein Photovoltaikmodul sowie eine Beleuchtungseinrichtung, die auch zur Kennzeichnung von Fluchtwegen verwendet werden kann.

Weiterhin wird in der US 2004/0027837 A1 eine optische Glasfaserbeleuchtung in transparenten Stäben beschrieben, die als Handlampe oder Nummernschildbeleuchtung verwendet werden kann.

In der DE 10 2007 048 099 A1 wird ein Beleuchtungsmodul zum Einbauen in Handläufe usw. und zum Be- und Ausleuchten von Regalen, Gerüsten, Treppenstufen usw. beschrieben. Dazu können Beleuchtungsmodule aus einer mit LED's bestückten Leiterplatte verwendet werden.

Die JP 2007-230380 bezieht sich auf eine Licht emittierende Griffstange eines Fahrzeugs als optisches Anzeigemittel für den offen/geschlossen Zustand einer Tür einer Eisenbahn, wodurch Unfälle beim Ein- und Aussteigen vermieden werden sollen. Dazu ist ein Handgriff aus einem Metallrohr mit mindestens einem Langloch versehen, in dem eine glatte Acrylstange fixiert ist. Die äußere Oberfläche der Acrylstange ist mit einem schmalen Streifen mit aufgerauter Oberfläche versehen, der dem Langloch entspricht.

An einem Ende des Metallrohres befindet sich eine Reflektorplatte und am anderen Ende des Metallrohres befindet sich eine Beleuchtungseinheit mit einer hoch intensiven LED.

Das in die Acrylstange abgestrahlte Licht wird auf der Innenseite durch Totalreflexion reflektiert und strahlt über den aufgerauten Streifen nach außen. Die Beleuchtung wird gemeinsam mit der Türsteuerung geschaltet, wobei das Öffnen und Schließen durch ein Blinklicht und die geöffnete Tür durch ein Dauerlicht angezeigt wird.

Schließlich geht aus der US 7 347 606 B1 ein Lichtband mit einem Lichtschlauch aus einem durchsichtigen elastischen Material hervor, der in einen u-förmigen Aufnahmekanal eines Aufnahmeelementes eingerastet wird. Dazu ist der Kanal im Öffnungsbereich mit schmalen Längsrippen versehen, die in den Kanal hineinragen. Dieses Leuchtband ist zur Montage auf oder im Wesentlichen ebenen Oberflächen vorgesehen und dient der Beleuchtung von verschiedenen Innen- und Außenkonstruktionen.

Durch die Anordnung des Lichtschlauches im Kanal wird dieser vor unbeabsichtigter Entfernung und vor Beschädigung geschützt und ermöglicht eine nützliche und dekorative ästhetische Beleuchtung.

Der Erfindung liegt nun die Aufgabe zugrunde, ein Fahrzeug mit einem Evakuierungslicht zur sicheren und intuitiv wirkenden Markierung von Fluchtwegen aus Fahrzeugen zur Personenbeförderung zur Verfügung zu stellen, mit dem das Entstehen von Panik in Notfällen vermieden wird und das eine sichere Funktion auch bei Ausfall des Bordnetzes sowie eine einfache Montage und Wartung gewährleistet. Gelöst wird die der Erfindung zugrunde liegende Aufgabe durch die Merkmale des Hauptanspruchs. Die erfindungsgemäße Ausgestaltung der Handläufe oder der Haltestangen erlaubt eine wesentlich erleichterte Montage und einen sicheren Betrieb auch bei ausgefallenem Bordnetz.

Die Umschaltbarkeit der Farbe der Leuchtdioden kann ferngesteuert erfolgen und somit als Richtungsanzeige für den Ausstieg genutzt werden, weil somit die Ausstiegsrichtung eindeutig gekennzeichnet werden kann.

Zusätzlich kann das Kunststoffrohr auch grün eingefärbt sein.

Als dezentrale Stromversorgung kann eine Minibatterieanlage vorgesehen sein.

Alternativ kann die Stromversorgung des Evakuierungslichtes auch über Akkumulatoren erfolgen. Bei Ausfall des Bordnetzes kann dann gewährleistet werden, dass sich das Evakuierungslicht selbsttätig aktivieren kann.

Nachfolgend wird die Erfindung an einem Ausführungsbeispiel näher erläutert.

Das erfindungsgemäße Evakuierungslicht besteht aus einer grünen oder grün/rot umschaltbaren Beleuchtung, die in die nach unten und außen führenden Handläufe bzw. Haltestangen an den Waggontüren auf der Waggoninnenseite integriert ist und längs desselben verläuft. Dazu ist das üblicher Weise aus Edelstahl bestehende Rohr des Handlaufes bzw. der Haltestange mit mindestens einem Längsschlitz versehen, der in die Handlaufe eingefräst oder anderweitig eingebracht sein kann, hinter denen die Beleuchtung angeordnet ist.
Die Beleuchtung besteht im einfachsten Fall wegen des geringen Energieverbrauches aus einer Reihe von grün oder grün/rot umschaltbar leuchtenden Leuchtdioden oder alternativ aus weiß leuchtenden Leuchtdioden, die mit einer Abdeckung aus einem grünen Filter versehen sind.

Die Beleuchtung kann auch aus einzelnen elektrisch miteinander verbundenen Leuchtdioden oder LED-Leisten bestehen, die entweder von sich aus grün oder grün/weiß umschaltbar leuchten oder die weiß leuchtend, mit einem grünen Filter abgedeckt sind. Die LED-Leisten erlauben eine einfachere Montage.

Die Montage kann weiter vereinfacht werden, wenn die in einer Reihe angeordneten Leuchtdioden oder die LED-Leiste in einem durchsichtigen oder transparenten Kunststoffrohr oder einem besonders bruchfesten Glasrohr angeordnet werden, wodurch gleichzeitig die Leuchtdioden oder LED-Leisten vor Beschädigung sicher geschützt sind. Dann muss lediglich das bestückte Kunststoff- oder Glasrohr in den Handlauf eingeschoben und mit einer Stromquelle verbunden werden. Dazu sollte das Kunststoffrohr einen solchen Außendurchmesser aufweisen, der es erlaubt, dieses nahezu spielfrei in den Handlauf einzuschieben, wodurch einerseits eine feste Montage erreicht und andererseits das Entstehen von Klappergeräuschen vermieden wird. Das Kunststoffrohr kann auch grün eingefärbt sein.

Um den Einbau des transparenten Kunststoffrohres auch in solchen Handläufen oder Haltestangen zu ermöglichen, die abgebogene Enden aufweisen, sind diese mindestens an einem Endbereich des geraden Teils zum Einsetzen des Kunststoffrohres längs teilbar.

Der Handlauf kann mittels einer Steckverbindung oder einer Schraub- oder Bajonettverbindung längs teilbar sein, was auch bei größerer mechanischer Belastung eine ausreichende Stabilität gewährleistet.

Um auch bei Ausfall des Bordnetzes eine sichere Funktion des Evakuierungslichtes zu gewährleisten, sind die Leuchtdioden oder die LED-Leisten mit einer schaltbaren dezentralen Stromversorgung verbunden. Das können eine Minibatterieanlage oder Akkumulatoren für jede Tür oder jedes Türpaar sein.

Im Falle von Akkumulatoren können diese mit dem Bordnetz verbunden werden, was eine ständige Bereitschaft des Evakuierungslichtes gewährleistet und zusätzlichen Wartungsaufwand zum Wechsel der Batterien vermeidet.

Das Evakuierungslicht kann auch fernsteuerbar ausgeführt werden und zwar derart, dass die Leuchtdioden oder die LED-Leisten jeweils einer Waggonseite getrennt schaltbar sind, so dass der Zugbegleiter oder der Triebfahrzeugführer diese auf der zur Evakuierung des Waggons vorgesehenen Seite einschalten kann. Zusätzlich kann er auf der anderen Seite die Leuchtdioden oder die LED-Leisten auf rot umschalten, um so die gesperrten Ausstiege zu kennzeichnen. Das Schalten des Evakuierungslichtes kann auch Fahrtrichtungsabhängig automatisch erfolgen, wenn ein normaler Halt erfolgen soll, oder wenn eine Notsituation eintreten sollte.

Werden grün/rot umschaltbare Leuchtioden verwendet, können die LED-Leisten auch für eine elektronisch gesteuerte Ausstiegsrichtungsanzeige genutzt werden (Tür freigegeben/Tür gesperrt), d.h. beim Einfahren in die Haltestelle/den Bahnhof wird mit dem grünen Licht in der Haltestange bzw. dem Handlauf die Ausstiegsrichtung angezeigt. Mit den rot geschalteten LED-Leisten kann in der Haltestelle bzw. im Bahnhof und natürlich auch im Notfall eine generelle Verbotsrichtung angezeigt werden.

Die Erfindung bietet ein situationsgerechtes Evakuierungslicht, das zur sicheren und intuitiven Markierung von Fluchtwegen, insbesondere aus schienengebundenen Fahrzeugen zur Personenbeförderung durch Tunnels, wie Personenzüge, Untergrundbahnen o.dgl. besonders geeignet ist. Auch lässt sich dadurch wirksam verhindern, dass Passagiere in der Aufregung auf der falschen Seite aussteigen.

## Patentansprüche

1. Fahrzeug zur Personenbeförderung, insbesondere schienengebundenes Fahrzeug zur Personenbeförderung durch Tunnel, wie Personenzüge, Untergrundbahnen oder andere öffentliche Verkehrsmittel mit einem Evakuierungslicht, insbesondere für nach unten und außen führende Handläufe oder Haltestangen an Waggontüren auf der Waggoninnenseite, zur sicheren und intuitiv wirkenden Markierung von Fluchtwegen, mit einem Handlauf oder einer Haltestange, wobei der Handlauf bzw. die Haltestange als Rohr ausgebildet ist, das mit mindestens einem längs desselben verlaufenden Längsschlitz versehen ist, hinter dem das Evakuierungslicht angeordnet ist, wobei das Evakuierungslicht als grüne oder bevorzugt grün/ rot umschaltbare Beleuchtung in Form von miteinander verbundenen Leuchtdioden oder LED-Leisten ausgebildet ist, die längs in dem Handlauf bzw. in der Haltestange verläuft und in diesem oder dieser integriert ist, wobei die Leuchtdioden oder LED-Leisten mit einer schaltbaren dezentralen Stromversorgung verbunden sind, wobei die Leuchtdioden oder LED-Leisten fernsteuerbar sind und zwar derart, dass die Leuchtdioden oder die LED-Leisten jeweils einer Fahrzeugsseite getrennt schaltbar sind, wobei das Evakuierungslicht aus einem durchsichtigen oder transparenten Kunststoffrohr oder einem besonders bruchfesten Glasrohr besteht, das in die Handläufe oder Haltestangen einschiebbar ist und in dem die miteinander verbundenen Leuchtdioden oder LED-Leisten angeordnet sind, wobei das Kunststoff- oder Glasrohr einen solchen Außendurchmesser aufweist, der es erlaubt, das Kunststoff-oder Glasrohr in den Handlauf oder in die Haltestange nahezu spielfrei einzuschieben, und wobei der Handlauf bzw. die Haltestange mindestens an einem Endbereich eines geraden Teils des Handlaufs oder der Haltestange zum Einsetzen des Kunststoff- oder Glasrohres mittels einer Steck-, Schraub- oder Bajonettverbindung längs teilbar ist.

2. Fahrzeug nach Anspruch 1, **dadurch gekennzeichnet, dass** weiß leuchtende Leuchtdioden oder LED-Leisten mit einem grünen Filter abgedeckt sind.

3. Fahrzeug nach Anspruch 1, **dadurch gekennzeichnet, dass** das Kunststoffrohr grün eingefärbt ist.

4. Fahrzeug nach Anspruch 1, **dadurch gekennzeichnet, dass** die Stromversorgung eine Minibatterieanlage ist.

5. Fahrzeug nach Anspruch 1, **dadurch gekennzeichnet, dass** die Stromversorgung aus Akkumulatoren besteht.

## Claims

1. Vehicle for conveyance of passengers, in particular rail-bound vehicle for conveyance of passengers through tunnels, such as passenger trains, underground railways or other means of public transport, comprising an evacuation light, in particular for handrails or grab rails leading downwards and outwards on carriage doors on the carriage interior, for the marking of escape routes that is reliable and found to be intuitive comprising a handrail or a grab rail, wherein the handrail or respectively the grab rail is embodied as a tube provided with at least one longitudinal slot extending along the latter, behind which the evacuation light is arranged, wherein the evacuation light is embodied as green or preferably green-red switchable illumination in the form of interconnected light-emitting diodes or LED strips, which extends longitudinally in the handrail or respectively in the grab rail and is integrated therein, wherein the light-emitting diodes or LED strips are connected to a switchable decentralized power supply, wherein the light-emitting diodes or LED strips are remotely controllable, specifically in such a way that the light-emitting diodes or the LED strips of a respective vehicle side are switchable separately, wherein the evacuation light consists of a see-through or transparent plastic tube or a particularly fracture-resistant glass tube, which is insertable into the handrails or grab rails and in which the interconnected light-emitting diodes or LED strips are arranged, wherein the plastic or glass tube has such an external diameter that allows the plastic or glass tube to be inserted into the handrail or into the grab rail virtually without play, and wherein the handrail or respectively the grab rail is longitudinally divisble at least at an end region of a straight part of the handrail or the grab rail for insertion of the plastic or glass tube by means of a plug, screw or bayonet connection.

2. Vehicle according to Claim 1, **characterized in that** light-emitting diodes or LED strips which emit white light are covered with a green filter.

3. Vehicle according to Claim 1, **characterized in that** the plastic tube is coloured green.

4. Vehicle according to Claim 1, **characterized in that** the power supply is a mini-battery installation.

5. Vehicle according to Claim 1, **characterized in that** the power supply consists of rechargeable batteries.

## Revendications

1. Véhicule pour le transport de voyageurs, en particulier véhicule ferroviaire pour le transport de voyageurs dans des tunnels tels que des voies ferrées souterraines ou d'autres moyens de transport publics, comportant une lumière d'évacuation, en particulier pour des mains courantes ou des garde-corps menant vers le bas et vers l'extérieur, placés sur la face interne du wagon pour signaler les issues de secours, au moyen d'une main courante ou d'un garde-corps, dans lequel la main courante ou le garde-corps est réalisé sous la forme d'un tube qui est pourvu d'au moins une fente longitudinale s'étendant le long de celui-ci, derrière laquelle est disposée la lumière d'évacuation, dans lequel la lumière d'évacuation est réalisée sous la forme d'un éclairage vert ou de préférence vert/rouge commutable se présentant sous la forme de diodes électroluminescentes ou de bandes de LED interconnectées, lequel éclairage s'étend longitudinalement dans la main courante ou dans le garde-corps et y est intégré, dans lequel les diodes électroluminescentes ou les bandes de LED sont connectées à une source d'alimentation décentralisée commutable, dans lequel les diodes électroluminescentes ou les bandes de LED peuvent être commandées à distance de manière à ce que les diodes électroluminescentes ou les bandes de LED puissent être respectivement activées séparément d'un côté du véhicule, dans lequel la lumière d'évacuation est constituée d'un tube de plastique translucide ou transparent ou d'un tube de verre particulièrement résistant à la rupture qui peut être inséré dans les mains courantes ou les garde-corps et dans lequel sont disposées les diodes électroluminescentes ou les bandes de LED interconnectées, dans lequel le tube de plastique ou de verre présente un diamètre extérieur tel qu'il permet d'insérer le tube de plastique ou de verre dans la main courante ou dans le garde-corps pratiquement sans aucun jeu, et dans lequel la main courante ou le garde-corps peut être divisé longitudinalement au moins dans une région d'extrémité d'une partie rectiligne de la main courante ou du garde-corps afin d'insérer le tube de plastique ou de verre au moyen d'un raccord enfichable, vissable ou à baïonnette.

2. Véhicule selon la revendication 1, **caractérisé en ce que** des diodes électroluminescentes ou des bandes de LED produisant de la lumière blanche sont recouvertes d'un filtre vert.

3. Véhicule selon la revendication 1, **caractérisé en ce que** le tube de plastique est de couleur verte.

4. Véhicule selon la revendication 1, **caractérisé en ce que** l'alimentation électrique est une installation à batteries miniatures.

5. Véhicule selon la revendication 1, **caractérisé en ce que** l'alimentation électrique est constituée d'accumulateurs.
